# EUROPEAN PATENT APPLICATION

(11) **EP 2 991 024 A1**
(43) Date of publication of application: **02.03.2016**
(21) Application number: 14306309.7
(22) Date of filing: 25.08.2014
(51) Int. Cl.: G06Q 30/04, G07B 15/02, G06Q 50/30, G06Q 20/04

(54) **Method for measuring the use of a vehicle by a user and corresponding system**

(71) Applicant: Gemalto SA, 92190 Meudon (FR)
(72) Inventor: Rhelimi, Alain, 13881 GEMENOS (FR)

(57) **Abstract**

The invention is a method for measuring use of a vehicle by a user which has a portable device able to communicate using a short range wireless channel. The vehicle includes a concentrator module able to communicate through the short range wireless channel according to a range of coverage. The method comprises the steps of:
- checking that the portable device is within the range at a plurality of moments representative of a preset transport section,
- generating a result data reflecting the use of the vehicle by the user as a result of the checking made at the plurality of moments.

## Description

### (Field of the invention)

The present invention relates to methods of measuring the use of a vehicle by a user. It relates particularly to methods of automatically measuring the use of a transport service by a user.

### (Background of the invention)

The use of a Transport service can be paid using a NFC (Near Field Communication) device which is tapped by the user when entering the vehicle. For example, the user may use his/her wireless smart card or his/her NFC enabled mobile phone. Due to the low range (e.g. 1 cm to 10 cm) of the NFC devices, the user must approach his/her NFC device near the NFC reader to validate his/her acceptance of the Transport service. This agreement requires a voluntary gesture made by the user.

When the NFC device of the user is in a wallet or a bag, the user has to retrieve his/her device and make the gesture. This procedure is not always convenient for the user.

There is a need to provide a way to perform a transport service agreement without an explicit gesture of the user.

### (Summary of the Invention)

An object of the invention is to solve the above mentioned technical problem.

The object of the present invention is a system for measuring the use of a vehicle by a user which has a portable device able to communicate using a short range wireless channel. The vehicle includes a concentrator module able to communicate through the short range wireless channel in a range of coverage. The concentrator module is configured to check that the portable device is within said range at a plurality of moments representative of a preset transport section. The concentrator module is configured to record a result data reflecting the use of the vehicle by the user as a result of the checking made at the plurality of moments.

Advantageously, the concentrator module may be configured to detect a vehicle stop and the plurality of moments may comprise at least two moments corresponding to two consecutive vehicle stops.

Advantageously, the portable device may comprise a first tracking module able to record a user data reflecting the movements of the portable device. The concentrator module may comprise a second tracking module able to record a transport data reflecting the movements of the vehicle. The concentrator module may be configured to retrieve the user data through the short range wireless channel and the concentrator module may comprise a checking module configured to compare the user data and transport data to generate the result data.

Advantageously, the concentrator module may be configured to send a reference time to the portable device and the user data may be generated as an average acceleration signature for a preset period based on the reference time.

Advantageously, the system may comprise a server able to retrieve the result data from the vehicle through a long range wireless channel and the server may comprise an engine configured to generate a billing data from the result data.

Advantageously, the concentrator module may be configured to generate a digital payment ticket from the result data and to send said digital payment ticket to the portable device through the short range wireless channel.

Another object of the invention is a vehicle including a concentrator module able to communicate through a short range wireless channel. The concentrator module has a range of coverage and is configured to check that a portable device is within said range at a plurality of moments representative of a preset transport section. The concentrator module is configured to record a result data reflecting the use of the vehicle by a user having the portable device as a result of the checking made at the plurality of moments.

Advantageously, the concentrator module may comprise a tracking module able to record a transport data reflecting the movements of the vehicle. The concentrator module may be configured to retrieve a user data from the portable device through the short range wireless channel and the concentrator module may comprise a checking module configured to compare the user data and transport data to generate the result data.

Another object of the invention is a method for measuring use of a vehicle by a user which has a portable device able to communicate using a short range wireless channel. The vehicle includes a concentrator module able to communicate through the short range wireless channel with a range of coverage. The method comprises the following steps:
- checking that the portable device is within said range of coverage at a plurality of moments representative of a preset transport section,
- generating a result data reflecting the use of the vehicle by the user as a result of the checking made at the plurality of moments and recording the result data.

Advantageously, the method may comprise the further steps:
- recording a user data reflecting the movements of the portable device,
- recording a transport data reflecting the movements of the vehicle,
- sending the user data to the vehicle through the short range wireless channel, and
- comparing said user data and transport data to generate the result data.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts an example of a system comprising a vehicle and a user's portable device according to the invention, and
- Figure 2 depicts another example of a system comprising a vehicle and a user's portable device according to the invention, and
- Figure 3 depicts another example of a system comprising a vehicle, a remote server and a user's portable device according to the invention.

### (Detailed description of the preferred embodiments)

The invention may apply to any type of vehicle intended to transport users, like rail travelers, undergrounds users or bus users. The portable device may be any kind of electronic device like a portable computer, telephone, PDA (Personal Digital Assistant), or tablet carried by the user.

The invention takes advantage of the fact that the user moves with the vehicle transporting the user then the distance between the user's portable device and the vehicle does not change in a wide range so the communication between both is not broken due to out of range conditions. Since the user moves with the vehicle then the accelerations of user's portable device and the vehicle are similar. An aspect of the invention may also take advantage of this.

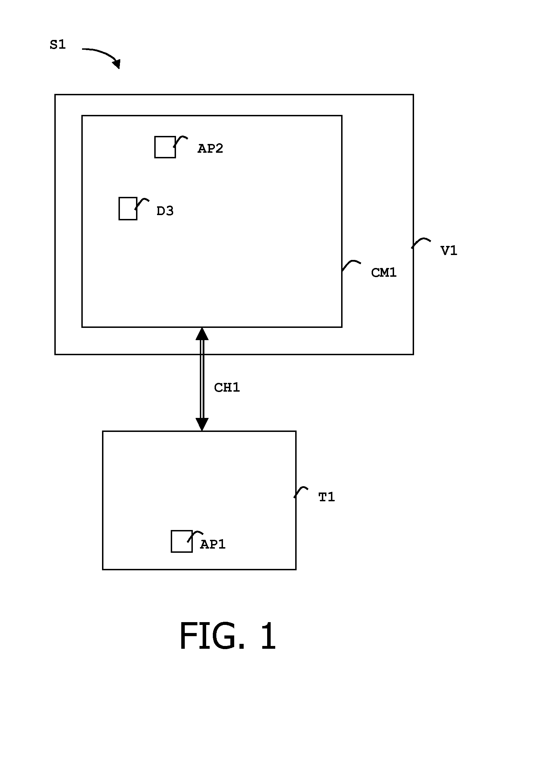

**Figure 1** shows an example of a system S1 that includes a vehicle V1 and a portable device T1 according to the invention.

In this example, the portable device T1 is a smart phone able to communicate via a short range wireless channel CH1 using the Bluetooth Low Energy (BLE) 4.0 protocol. The portable device T1 comprises an application AP1 which is configured to periodically try to connect the concentrator module CM1 of a vehicle V1. For example, the application AP1 can regularly send a ping through BLE aiming at connecting the concentrator module CM1. The application AP1 can be an application running via the operating system of the portable device T1. Alternatively, the smart phone T1 may comprise a Universal Integrated Circuit Card (UICC), a software-emulated UICC or a Trusted Execution Environment (TEE) or a soldered UICC (also named e-UICC for "embedded UICC") that can embed the application AP1.

The vehicle V1 includes a concentrator module CM1 which is configured to communicate using the short range wireless channel CH1. In a preferred example, the concentrator module CM1 is able to communicate through the Bluetooth Low Energy (BLE) 4.0 protocol. The concentrator CM1 has a preset range of coverage (i.e. a maximum range) for the short range wireless channel CH1. For instance the preset range can be 50 meters. The concentrator module CM1 comprises an application AP2 which is configured to establish the short range wireless channel CH1 with another device wireless device. In particular, the application AP2 can be configured to respond to the ping received from the portable device T1 via BLE. The concentrator module CM1 is configured to check that the portable device T1 is within the preset range of coverage at several moments. The checking may be carried out by controlling that the short range wireless channel CH1 is still alive at several moments (aka. periodic sampling). These moments are selected so as to be representative of a transport section taken by the vehicle V1. For instance, the concentrator module CM1 may perform a first checking during a stop, a second checking 20 seconds after starting and third checking during the next stop. Assuming the user stays into the vehicle V1 during the transport section, the three checking operations will show that the portable device T1 remained in the vehicle V1. The concentrator module CM1 is configured to generate a result data D3 reflecting the use of the vehicle V1 by the user of the portable device T1. The concentrator module CM1 is configured to record the generated result data D3 either in the vehicle V1 or in the portable device T1. The concentrator module CM1 is assumed to be able to detect the vehicle stops. In one example, the concentrator module CM1 can detect a vehicle stop thanks to an accelerometer as well; the concentrator CM1 can detect a move of the vehicle by using the accelerometer and favor the counting of the users via a BLE ping because it is highly improbable that the user will step out when the vehicle moves. In another example, the concentrator module CM1 can detect a vehicle stop thanks to a positioning device which matches the current position of the vehicle with a preset stop position (like a station for example). In another example, the concentrator module CM1 can detect a vehicle stop by counting the number of active short range wireless channels, less connection may due to some users leaving the vehicle and it is only possible when the vehicle is stopped. A sensitive change in the number of active connections can be interpreted as a vehicle stop.

In another example, the concentrator module CM1 can detect a vehicle stop as soon as it has managed to establish a connection with a short range wireless equipment installed in a station.

In another example, the plurality of moments may be selected at random.

In another example, the vehicle V1 can comprise a positioning module (like a GPS) and the plurality of moments may be selected based on the position of the vehicle.

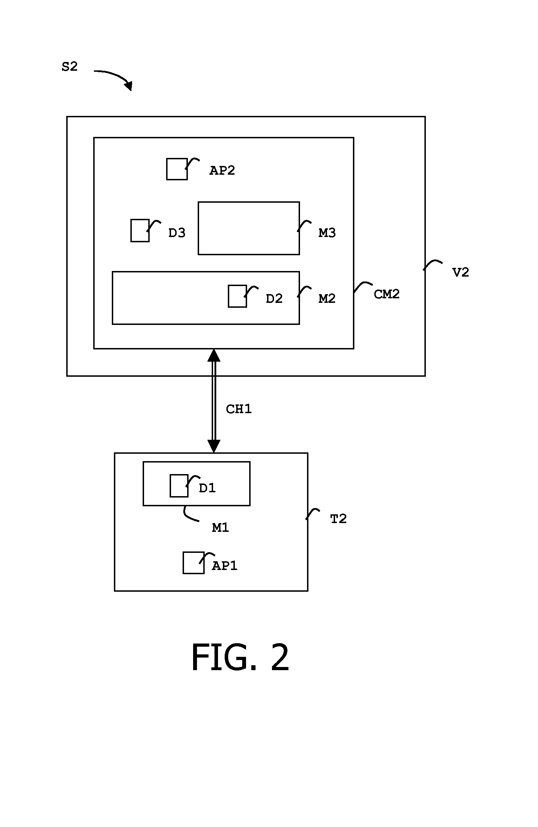

**Figure 2** shows an example of a system S2 that includes a vehicle V2 and a portable device T2 according to the invention.

The portable device T2 is similar to the portable device T1 of Figure 1 with the following differences. The portable device T2 comprises a tracking module M1 adapted to record a user data D1 reflecting the movements of the portable device T2. For instance, the tracking module M1 can rely on inertial sensors like accelerometer or gyroscope. Advantageously, the tracking module M1 generates the user data D1 for a time window set by the concentrator module CM2 of the vehicle V2. In this case a time reference is assumed to have been received from the concentrator module CM2 through the short range wireless channel CH1.

The vehicle V2 comprises a concentrator module CM2 similar to the concentrator module CM1 of Figure 1 with the following differences.

The concentrator module CM2 may be configured to reply to a ping initiated by the application AP1 by sending a message requesting that the tracking module M1 starts measures.

The concentrator module CM2 comprises a tracking module M2 adapted to record a transport data D2 reflecting the movements of the vehicle V2. For instance, the tracking module M2 can rely on inertial sensors and is fixedly attached to the vehicle. Advantageously, the tracking module M2 generates the transport data D2 for a time window set by the concentrator module CM2.

The concentrator module CM2 is adapted to retrieve the user data D1 from the portable device T2 through the short range wireless channel CH1.

The concentrator module CM2 comprises a checking module M3 configured to compare user data D1 with the transport data D2 and to generate the result data D3 accordingly. In other words, the checking module M3 generates the result data D3 by taking into account both the checking operations performed at a plurality of moments and the result of the comparison between the user data D1 and the transport data D2.

The control of consistency between user data D1 with the transport data D2 allows discarding a portable device which unexpectedly remains in the range of the concentrator module CM2. For instance, on the road, a driver of a car may follow a route similar to a bus and stay near the bus during a full transport section. By checking that the vehicle and the portable device are subject to similar movements (i.e. acceleration signature), the concentrator module CM2 can control that the user of the portable device is really aboard the vehicle.

In one example, the user data D1 and the transport data D2 are computed as an average acceleration signature for a period. Thus the movements of the portable device into the vehicle do not influence the result of the comparison.

In another example, user data D1 and the transport data D2 are computed based on the measured instantaneous acceleration at a set of times. In this case, the comparison is considered as successful if more than a preset percentage of the values are equal or with a difference smaller than a threshold.

For instance, let's assume that ten measures are performed and ten couples (user data D1/transport data D2) are generated for a transport section. If the difference between user data value and transport data value is lower than 10% of the user data value, for eight couples, the comparison is considered as being successful and the portable device is not discarded by the concentrator module CM2.

The idea is to tolerate a few errors in the signature comparison in order to allow parasitic signature samples due to the move of the user into the vehicle.

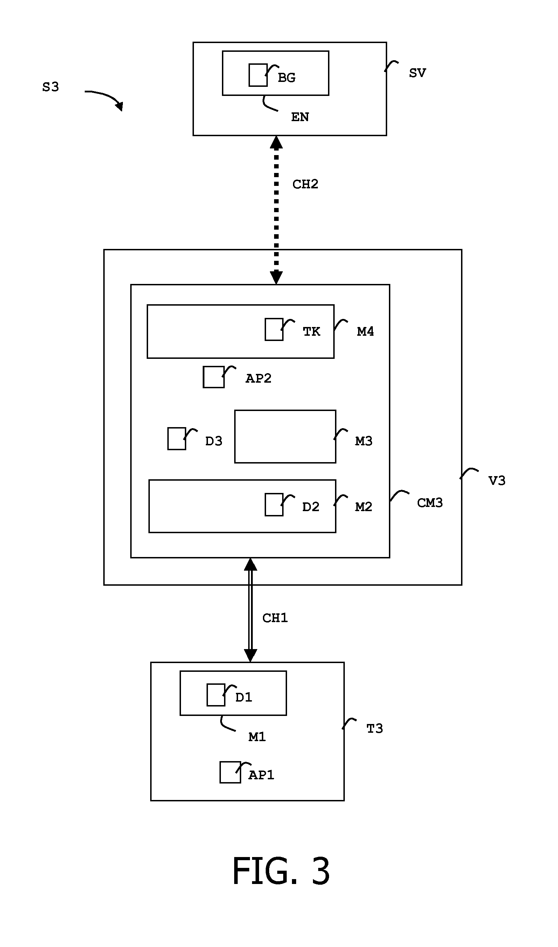

Figure 3 shows an example of a system S3 that includes a vehicle V3, a distant server SV and a portable device T3 according to the invention.

The portable device T3 is similar to the portable device T2 of Figure 2.

The vehicle V3 comprises a concentrator module CM3 similar to the concentrator module CM2 of Figure 2 with the following differences. The concentrator module CM3 is able to communicate with the server SV through a long range wireless channel CH2. For instance, the concentrator module CM3 may use a Telecom network (like GSM, 3G or 4G) for communicating with the server SV.

The server SV is configured to retrieve the result data D3 from the vehicle V3. The server SV comprises an engine EN adapted to generate a billing data D4 by using the result data D3. The generated billing data D4 corresponds to the use of the transport service by the user for the transport section where the controls have been performed. The engine EN may have access to a database describing the subscription of the user and generate the billing data D4 according to the rights allocated to the subscription. The server SV consolidates transactions for billing purpose.

The concentrator module CM3 can be configured to send periodically the result data D3 to the server SV. The concentrator module CM3 can also be configured to store permanently or temporally the result data D3. This storage of the result data D3 can be useful in case of lack of coverage of the long range wireless channel. (e.g. communication impossible in a tunnel)

Advantageously, the concentrator module CM3 may comprise a ticketing module M4 which is configured to generate a digital payment ticket TK. Preferably, the ticket is generated after the first move and the first connection if the presence aboard is qualified (e.g. acceleration signature) but the ticket is activated and visible on the application running on the user's device around half way between two normal stops or on the request of the network controller via the concentrator CM1.

The ticket may show at least the qualified entry station and additional information related to the mass transit operator

The portable device T3 can be configured to retrieve the digital payment ticket TK. When a ticket inspector wants to see the ticket of the user, the user can display the digital payment ticket TK thanks to his/her portable device.

In one example, the digital payment ticket TK may be generated as a dynamic ticket which changes periodically. For instance, the ticket value can change every 3 seconds. Advantageously, the digital payment ticket TK may comprise a value which is uniquely allocated to the concentrator module CM3. Thus all digital payment tickets generated by the concentrator module CM3 contain a specific mark representative of the concentrator module installed in the vehicle. Thanks to this specific mark, a ticket inspector may check the genuineness of the digital payment ticket displayed by a portable device of a user.

Thus the digital payment ticket TK may be timely diversified per vehicle and have a graphical presentation in order to prevent fake applications broadcasting genuine receipts.

The user can as well check the availability of the virtual ticket receipt and so prevent unexpected disabling of the application AP1 and wireless features.

Advantageously, the application AP1 can learn from the passenger behavior and activate automatically at a given period of the day. Alternatively, the application AP1 can be continuously running or started during preset time slots.

As well a mobile equipment of a personal in charge to control the user may request a direct connection to the user device and activates in real time subsequent pictograms synchronously on the user's and controller devices. A fake application relaying data from a genuine device can perform the synchronization without high timing constraints.

Another implementation for detecting a genuine application can be done by comparing the synchronization of a dynamic pictogram and the same dynamic pictogram on the main display of the vehicle. The personal in charge of the control may use her eyes (no specific equipment) of performing the said control.

It must be understood, within the scope of the invention, that the above-described embodiments are provided as non-limitative examples. In particular, the low range wireless channel may use any technology able to communicate with all users aboard the targeted vehicle. For instance, the low range wireless channel may use Zigbee © or Wi-Fi ©. Preferably, the low range wireless technology is selected so that it has a maximum cover range comprised between 1 meter and a few tens of meters.

The long range wireless channel may use any technology able to communicate across several kilometers, preferably with a moving vehicle.

The invention is well suited for mass transit and may apply to any kind of transport services like metro, bus, taxi, boat, plane and attraction equipments.

An advantage of the invention is to avoid explicit gesture of the passengers for validating a journey payment or any services involving the explicit boarding of the user into a equipment in motion.

The invention applies to both subscription and pay per use schemes.

Additionally, the invention allows getting information on the users of a vehicle. For example, the invention provides a way to count the passengers. The invention also allows real-time statistic about the use of a vehicle.

## Claims

1. A **system** (S1) for measuring the use of a vehicle (V1) by a user which has a portable device (T1) able to communicate using a short range wireless channel (CH1),
**characterized in that** the vehicle (V1) includes a concentrator module (CM1) able to communicate through the short range wireless channel (CH1), **in that** the concentrator module (CM1) has a range of coverage and is configured to check that the portable device (T1) is within said range at a plurality of moments representative of a preset transport section and **in that** the concentrator module (CM1) is configured to record a result data (D3) reflecting the use of the vehicle (V1) by the user as a result of the checking made at the plurality of moments.

2. A system according to claim 1, wherein the concentrator module (CM1) is configured to detect a vehicle stop and wherein the plurality of moments comprises at least two moments corresponding to two consecutive vehicle stops.

3. A system according to claim 1, wherein the portable device (T1) comprises a first tracking module (M1) able to record a user data (D1) reflecting the movements of the portable device (T1), wherein the concentrator module (CM1) comprises a second tracking module (M2) able to record a transport data (D2) reflecting the movements of the vehicle (V1), wherein the concentrator module (CM1) is configured to retrieve said user data (D1) through the short range wireless channel (CH1) and in that the concentrator module (CM1) comprises a checking module (M3) configured to compare said user data (D1) and transport data (D2) to generate the result data (D3).

4. A system according to claim 3, wherein the concentrator module (CM1) is configured to send a reference time to the portable device (T1) and wherein said user data (D1) is generated as an average acceleration signature for a preset period based on the reference time.

5. A system according to claim 1, wherein the system comprises a server (SV) able to retrieve said result data (D3) from the vehicle (V1) through a long range wireless channel (CH2) and wherein the server (SV) comprise an engine (EN) configured to generate a billing data (BG) from said result data (D3).

6. A system according to claim 1, wherein the concentrator module (CM1) is configured to generate a digital payment ticket (TK) from the result data (D3) and to send said digital payment ticket (TK) to the portable device (T1) through the short range wireless channel (CH1).

7. A vehicle (V1),
**characterized in that** it includes a concentrator module (CM1) able to communicate through a short range wireless channel (CH1), **in that** the concentrator module (CM1) has a range of coverage and is configured to check that a portable device (T1) is within said range at a plurality of moments representative of a preset transport section and **in that** the concentrator module (CM1) is configured to record a result data (D3) reflecting the use of the vehicle (V1) by a user having the portable device (T1) as a result of the checking made at the plurality of moments.

8. A vehicle (V1) according to claim 7, wherein the concentrator module (CM1) comprises a tracking module (M2) able to record a transport data (D2) reflecting the movements of the vehicle (V1), wherein the concentrator module (CM1) is configured to retrieve a user data (D1) from the portable device (T1) through the short range wireless channel (CH1) and wherein the concentrator module (CM1) comprises a checking module (M3) configured to compare said user data (D1) and transport data (D2) to generate the result data (D3).

9. A **method** for measuring use of a vehicle (V1) by a user which has a portable device (T1) able to communicate using a short range wireless channel (CH1),
**characterized in that** the vehicle (V1) includes a concentrator module (CM1) able to communicate through the short range wireless channel (CH1), **in that** the concentrator module (CM1) has a range of coverage, and **in that** the method comprises the following steps:
- checking that the portable device (T1) is within said range at a plurality of moments representative of a preset transport section,
- generating a result data (D3) reflecting the use of the vehicle (V1) by the user as a result of the checking made at the plurality of moments and recording the result data (D3).

10. A method according to claim 9, wherein the method comprises the further steps:
- recording a user data (D1) reflecting the movements of the portable device (T1),
- recording a transport data (D2) reflecting the movements of the vehicle (V1),
- sending the user data (D1) to the vehicle (V1) through the short range wireless channel (CH1),
- comparing said user data (D1) and transport data (D2) to generate the result data (D3).
